# EUROPEAN PATENT APPLICATION

(11) **EP 1 788 072 A1**
(43) Date of publication of application: **23.05.2007**
(21) Application number: 05767065.5
(22) Date of filing: 01.08.2005
(51) Int. Cl.: C12M 1/00, A61D 19/00, C12N 1/04, C12N 5/06, F25B 21/02

(54) **BIOSAMPLE FREEZING APPARATUS AND METHOD OF FREEZING**

(30) Priority: 06.08.2004 JP 2004230875
(71) Applicant: Livestock Improvement Association of Japan Inc., Tokyo 104-0031 (JP)
(72) Inventor: SASAKI, K., c/o LIVESTOCK IMPROVEMENT ASSOCIATION, Maebashi-shi, Gunma 371-0121 (JP); UCHIYAMA, K., c/ LIVESTOCK IMPROVEMENT ASSOCIATION, Maebashi-shi, Gunma 371-0121 (JP)
(74) Representative: Finnie, Peter John
(86) International application number: PCT/JP2005/014045
(87) International publication number: WO 2006/013824

(57) **Abstract**

A biological sample freezing apparatus for freezing biological samples contained in tube-like sample containers (10). The freezing apparatus comprises a heat transmission block (20) that is cooled to a predetermined temperature and/or at predetermined cooling rate, the heat transmission block having a plurality of separate openings (21) that extend through the block (20) from one end to the other end. One of the sample containers is inserted into and passed through each of the openings (21).

## Description

### CROSS-REFERENCE TO RELATED APPLICATIONS

The present application claims priority from Japanese Patent Application No. 2004-230875 filed on August 6, 2004, which is herein incorporated by reference.

### TECHNICAL FIELD

The present invention relates to an apparatus and method for freezing biological samples and is effective when applied to the cooling and freezing of cells or tissues such as semen or embryos for cryopreservation.

### BACKGROUND ART

In order to cryopreserve a biological sample such as semen or embryos, the sample that is at room temperature or in a non-frozen state must be cooled to be frozen, in which a damage occurs in the sample if the cooling rate up to reaching a frozen state is not appropriate. That is, if the cooling rate is too high, cells are frozen with moisture left inside them, which causes intracellular freezing, and the cells are subjected to a fatal damage. On the other hand, if the cooling rate is too low, damage (solution effect) occurs in the cells due to the condensation of intra- and extra-cellular solutions due to extracellular freezing. For example, if the cooling rate is not appropriate when freezing semen, the survival rate and degree of activity of the sperms after thawed decrease, and thus the impregnation rate decreases. Hence, a cooling rate that minimizes the possibility of both the intracellular freezing and the solution effect is an optimum cooling rate.

Furthermore, an appropriate cooling process for cryopreservation varies depending on the type of sample or the like. Thus, a means for freezing biological samples is needed which can realize appropriate cooling conditions according to the type of sample or the like.

Conventionally, used as such a freezing means are a method of adjusting the cooling rate (prior art 1: Japanese Patent Publication No. H08-4601), wherein biological samples enclosed in straws are mounted on a breathable mount provided in an upper part of a sample freezing container containing liquid nitrogen, which adjusts it by changing an electric current flowing through an electric heater provided in the liquid nitrogen thereby changing the amount of cool liquid nitrogen gas generated, and a method of adjusting the cooling rate by changing the amount of cool liquid nitrogen gas that is ejected into a sample freezing container. Since cooling and freezing the samples by use of its gas phase, these methods have the problem that the cooling rate is not the same for each sample and that also they are inferior in reproducibility.

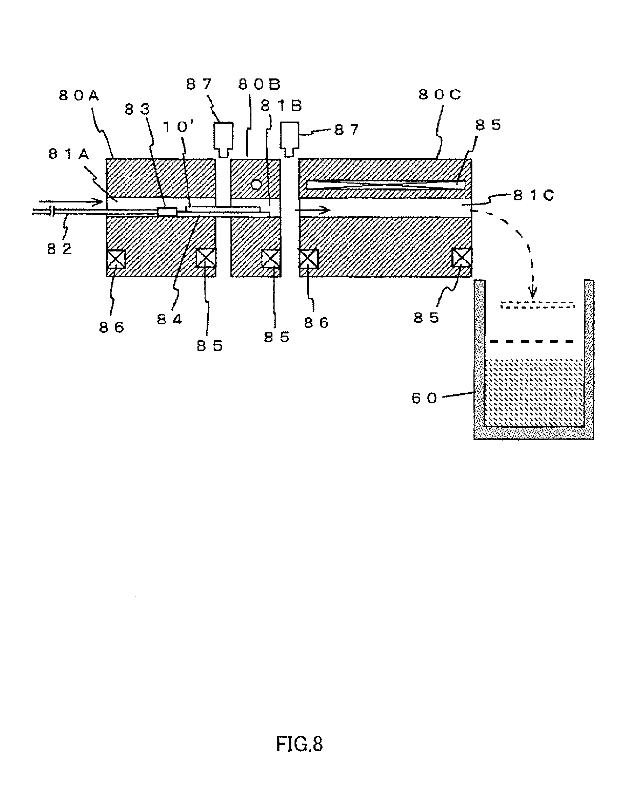

Meanwhile, there is a biological sample freezing apparatus (prior art 2: U.S. Patent No. 5, 873,254) which is configured with three heat transmission blocks 80A, 80B, 80C as shown in FIG. 8.

In the apparatus shown in FIG. 8, the heat transmission blocks 80A, 80B, 80C are provided respectively with tunnels 81A, 81B, 81C through which a sled 84 moves and passes. The sled 84 has a plurality of tube-like sample containers 10' mounted thereon which contain biological samples, and is pushed by a piston 83 provided on an end of a push rod 82 thereby moving and passing through the tunnels 81A, 81B, 81C.

In addition, each heat transmission block 80A, 80B, 80C is provided with a freezing apparatus 85 and a heater 86, and the block is heated on an end side while cooled on the other end side. The plurality of sample containers 10' mounted on the sled 84 are sequentially cooled while moving from the heated end side to the cooled end side of each heat transmission block 80A, 80B, 80C.

Furthermore, a video camera 87 is placed in between each of the heat transmission blocks 80A, 80B, 80C so as to monitor the cooling states of the samples. Thereby, the sample in each sample container 10' is frozen to a cryopreservable state. The sample containers 10' having gone through this cooling process are stored in a final freezing container 60 being cooled by liquid nitrogen gas.

With the technology of the prior art 2, the following problems exist:

In the above apparatus in which the plurality of sample containers 10' mounted on the sled 84 are cooled in the tunnels 81A, 81B, 81C of the heat transmission blocks 80A, 80B, 80C, a space having an enough size to allow the sled 84 to pass through without a stoppage is formed in the tunnels 81A, 81B, 81C. Cooling negative heat from the heat transmission blocks 80A, 80B, 80C is transmitted to the sample containers 10' on the sled 84 via air in the tunnels 81A, 81B, 81C. That is, the sample containers 10' are indirectly cooled via an air layer in the tunnels 81A, 81B, 81C.

In the tunnels 81A, 81B, 81C having spaces of an enough size to allow the sled 84 to pass through without a stoppage formed therein, a clearance space of a size greatly larger than the outer diameter of the sample containers 10' occurs between the sample containers 10' and the inner surface of the tunnels 81A, 81B, 81C. That is, there exists a thick air layer between the sample containers 10' and the heat transmission blocks 80A, 80B, 80C, which prevents smooth and stable heat transmission.

Hence, even if the temperatures of the heat transmission blocks 80A, 80B, 80C are highly accurately adjusted, the cooling of the sample containers 10' is likely to be performed in a condition of temperatures different from those of the heat transmission blocks 80A, 80B, 80C. Further, the cooling condition of temperature is likely to vary depending on the mount position on the sled 84. That is, great variations occur in the cooling condition.

Hence, in the above apparatus, video cameras 87 are placed between the heat transmission blocks 80A, 80B, 80C so as to pick up and monitor the actual cooling states of the sample containers 10' mounted on the sled 84. However, even though the cooling states of the sample containers 10' on the sled 84 are monitored with the video cameras, the controlled temperatures of the heat transmission blocks 80A, 80B, 80C are not necessarily exactly reflected in the cooling condition of temperature for the sample containers 10', because the sample containers 10' are cooled via the air layer in the tunnels 81A, 81B, 81C. Moreover, since the heat transmission condition with the air layer in the tunnels 81A, 81B, 81C intervening is unstable, the cooling condition is bad in reproducibility.

Furthermore, the sled 84 intervenes thermally between the sample containers 10' and the heat transmission block 80A, 80B, 80C, and is an inhibiting factor of rendering the heat transmission unstable between the sample containers 10' and the heat transmission block 80A, 80B, 80C.

As such, with the above technology, it is difficult to accurately set the cooling condition via the temperatures of the heat transmission blocks 80A, 80B, 80C, and the cooling condition for the sample containers 10' is bad in reproducibility, and further, variations in the cooling condition are likely to occur between the sample containers 10'.

### DISCLOSURE OF THE INVENTION

The present invention was made in view of the above background and problems, and an object thereof is to provide a means that can provide appropriate and reproducible cooling conditions when cooling a plurality of sample containers containing biological samples for cryopreservation and that is effective in preventing the occurrence of variations in the cooling conditions between the sample containers, thereby enabling the cryopreservation of the samples with suppressing bad effects thereon.

The present invention provides the following means as apparatuses to solve the above problems.
(1) A biological sample freezing apparatus for freezing biological samples contained in tube-like sample containers, characterized by comprising a heat transmission block that is cooled to a predetermined temperature and/or at predetermined cooling rate, the heat transmission block having a plurality of separate openings that extend through the block from one end to the other end, each of the openings being formed such that one of the sample containers is inserted into and passed through the opening; and a movement driving means that causes the sample containers to pass through the openings respectively.
   The following means according to the means (1) are particularly preferable and desirable as embodiments.
(2) The biological sample freezing apparatus according to the means (1), characterized in that the plurality of openings are each formed to have such an inner diameter that a space formed between the inner surface of the opening and the sample container is at least smaller in thickness than the outer diameter of the sample container.
(3) The biological sample freezing apparatus according to the means (1) or (2), characterized in that the plurality of openings are each formed such that a space formed between the inner surface of the opening and the sample container is at 5% or less of the outer diameter of the sample container, or at 0.1 mm or less.
(4) The biological sample freezing apparatus according to any of the means (1) to (3), characterized in that the plurality of openings are arranged in parallel with each other and spaced a predetermined interval apart in the heat transmission block.
(5) The biological sample freezing apparatus according to any of the means (1) to (4), characterized in that provided on one end side of the heat transmission block is a guide table which positions the sample containers respectively along extension axes of the plurality of openings and which guides them into the openings respectively.
(6) The biological sample freezing apparatus according to any of the means (1) to (5), characterized in that the movement driving means comprises a plurality of push rods which push respectively the sample containers in a direction of axes of the openings to move, and a push driving means which causes the plurality of push rods to move in the direction of the axes of the openings at predetermined speed.
(7) The biological sample freezing apparatus according to the means (6), characterized in that the push driving means comprises a stepping motor or a servo motor as its driving source, and in that the freezing apparatus comprises a control means which manages the period and number of drive pulses for the stepping motor or the servo motor, thereby controlling movement speed and amount of the push rods.
(8) The biological sample freezing apparatus according to any of the means (1) to (7), characterized in that a Peltier device is used as a means for cooling the heat transmission block.
(9) The biological sample freezing apparatus according to any of the means (1) to (8), characterized in that a plurality of the heat transmission blocks are arranged serially along a direction of movement of the sample containers, and in that the freezing apparatus comprises a plurality of cooling means which each cool a respective one of the heat transmission blocks to a predetermined temperature or at predetermined cooling rate.
   Further, the present invention provides the following means as methods to solve the above problems.
(10) A biological sample freezing method for freezing biological samples contained in tube-like sample containers, characterized in that the sample containers are cooled by use of the biological sample freezing apparatus according to one of the above (1) to (9).
(11) The biological sample freezing method according to the means (10), characterized by comprising the step of causing the sample containers respectively to pass at predetermined speed through openings of a heat transmission block cooled to a predetermined temperature.
(12) The biological sample freezing method according to the means (10) or (11), characterized by comprising the step of causing the sample containers to stay for a predetermined time in openings of a heat transmission block cooled to a predetermined temperature.
(13) The biological sample freezing method according to any of the means (10) to (12), characterized by comprising the step of causing the sample containers to stay for a predetermined time in openings of a heat transmission block that is being cooled at predetermined cooling rate.
(14) The biological sample freezing method according to any of the means (10) to (13), characterized in that the sample containers are cooled by sequentially using two or more heat transmission blocks different in a set condition of temperature.

### BRIEF DESCRIPTION OF THE DRAWINGS

FIG. 1 shows the outline of a biological sample freezing apparatus according to the present invention by way of (a) a side view and (a) a top view;
FIG. 2 is a perspective view of a heat transmission block and a guide table of the apparatus shown in FIG. 1;
FIG. 3 shows (a) a side section of the heat transmission block and (b) a transverse section thereof and an enlarged section of its part;
FIG. 4 is a sectional view showing main part of another embodiment of the biological sample freezing apparatus according to the present invention;
FIG. 5 shows sections of a sample container suitable for the cooling process using the apparatus of the present invention;
FIG. 6 is a graph showing states of samples thawed after frozen in example 1 according to a biological sample freezing method of the present invention with comparing with those of prior art 1;
FIG. 7 is a graph showing states of samples thawed after frozen in example 2 according to a biological sample freezing method of the present invention with comparing with those of prior art 1; and
FIG. 8 is a sectional view showing the outline of a conventional biological sample freezing apparatus.

### <Explanation of Reference Numerals>

10, 10' Sample container; 12 Semi-circumference of one side; 13 Semi-circumference of the other side; 14 Cotton-like plug member; 15 Powder-like water retention agent; 16 Enclosing plug; 17 Air layer; 20, 20A, 20B Heat transmission block; 21 Opening; 25, 25A, 25B Cooling unit (Cooling means); 26 Temperature sensor; 30 Guide table; 31 Guide groove; 41 Base; 40 Movement driving means; 42 Push rod; 43 Rod guide; 44 Movable member; 45 Straight movement guide (Linear guide); 46 Stepping motor; 47 Ball screw; 50 Control-drive portion; 51 Temperature adjusting circuit; 52 Motor drive control circuit; 53 Operation/setting portion; 54 Main controller; 60 Final freezing container; 80A, 80B, 80C Heat transmission block; 81A, 81B, 81C Tunnel; 82 Push rod; 83 Piston; 84 Sled; 85 Freezing apparatus; 86 Heater; 87 Video camera; 100 Biological sample; φ1 Outer diameter of the sample container; φ2 Inner diameter of the opening

### BEST MODE FOR CARRYING OUT THE INVENTION

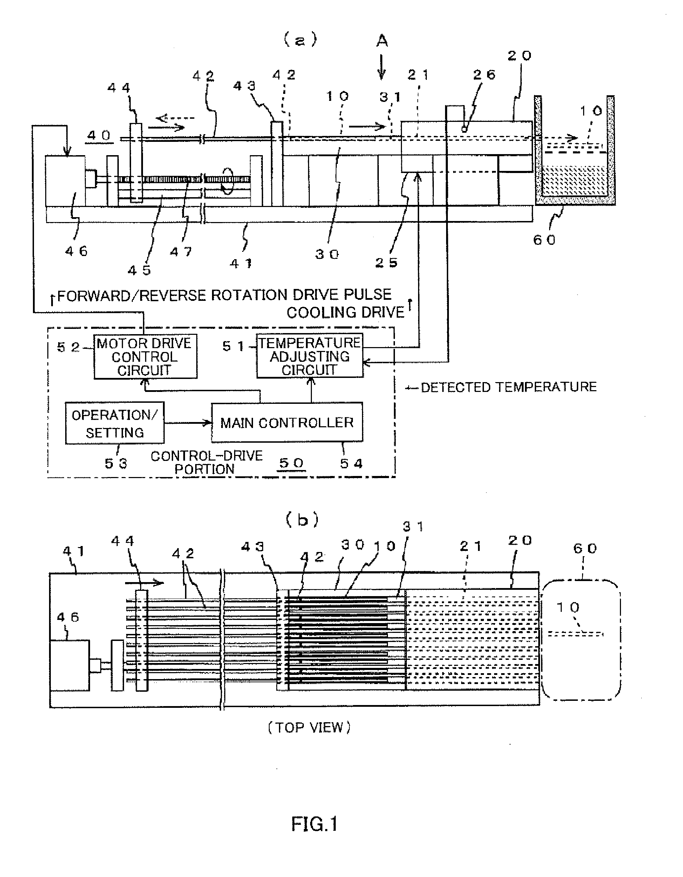

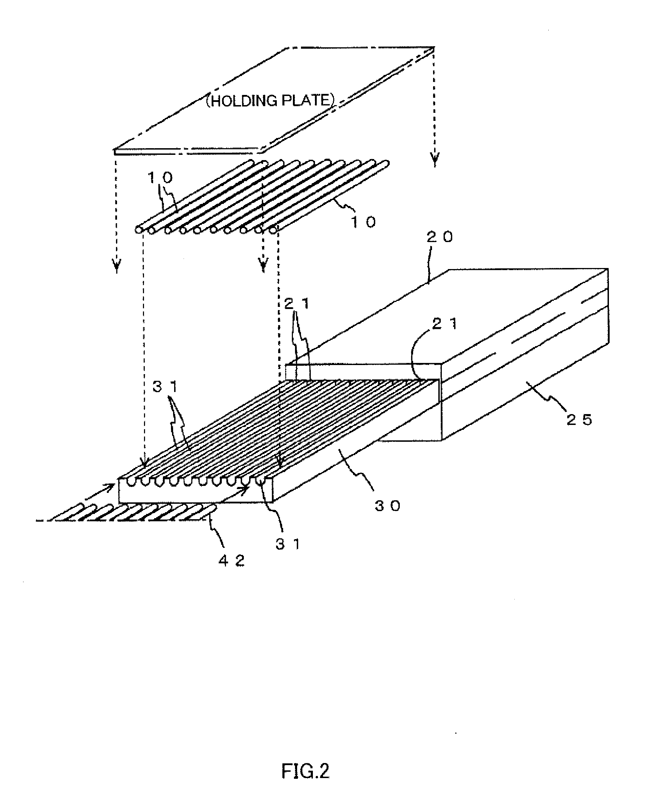

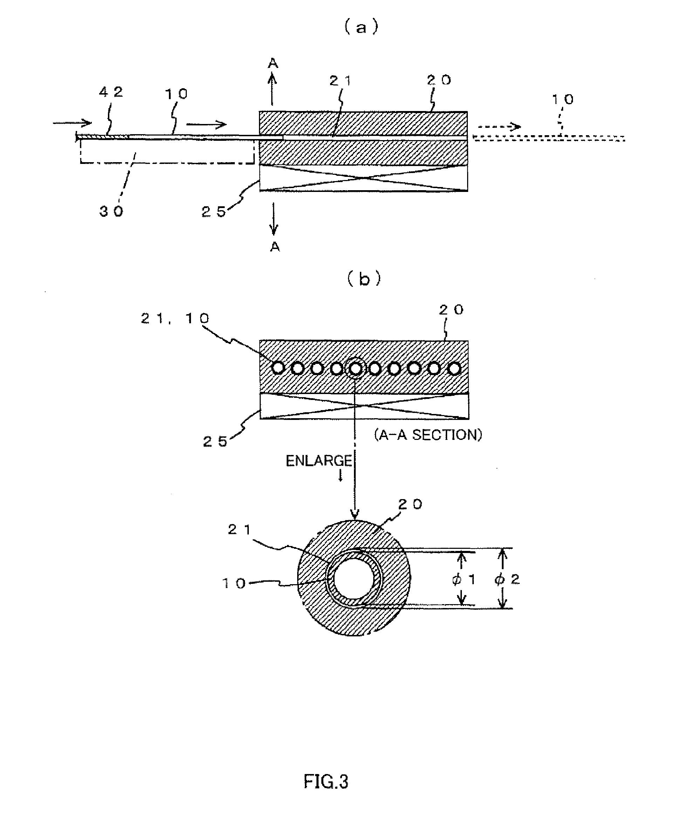

FIGS. 1 to 3 show one embodiment of a biological sample freezing apparatus to which the technology of the present invention is applied. FIG. 1 shows the outline of the entire apparatus by way of (a) a side view and (a) a top view. FIG. 2 is a perspective view of a heat transmission block and a guide table of the apparatus shown in FIG. 1. FIG. 3 shows (a) a side section of the heat transmission block and (b) a transverse section thereof and an enlarged section of its part.

The biological sample freezing apparatus shown in the Figures is used for the cryopreservation of cells or tissues such as semen, embryos, etc. The main part thereof comprises a heat transmission block 20, a guide table 30, a movement driving means 40, and a control-drive portion 50 as shown in FIG. 1. Biological samples are contained in tube-like sample containers (also called straws) 10, and a cooling process is performed thereon for cryopreservation.

The heat transmission block 20 is a rectangular plate-like solid block as shown in FIGS. 1 to 3, and is configured to be cooled to a predetermined temperature and/or at predetermined cooling rate by a cooling unit (cooling means) 25. Material for the heat transmission block 20 is metal or ceramic of high heat conductivity. As the metal material, for example, aluminum or aluminum alloy, copper or copper alloy such as brass, and the like are suitable. As the ceramic, aluminum nitride and the like are suitable.

The heat transmission block 20 has provided therein a plurality of separate openings 21 that extend through the block from one end to the other end. The plurality of openings 21 are arranged in parallel with each other and spaced a predetermined interval apart in the heat transmission block 20. Each opening 21 is formed to have a minimum inner diameter (φ2) to allow the sample container 10 to be inserted into and pass through it.

The opening 21 is formed to have the inner diameter φ2 that is slightly greater than the outer diameter φ1 of the sample container 10 as shown in (b) of FIG. 3. Thus, the sample container 10 is adapted, without forming extra space between it and the opening 21, to be inserted into and pass through the opening 21 in an almost fitted state as if there were no space between them.

Only if the opening 21 is formed to have such an inner diameter φ2 that a space between the inner surface of the opening 21 and the sample container 10 is smaller in thickness than the outer diameter φ1 of the sample container 10, the problems with the above prior art 2 can be solved.

That is, in the prior art 2, a space that is greatly larger than the outer diameter of the sample container is formed between the sample container and the heat transmission block, and the air layer in the large space is a factor of inhibiting cooling the sample containers appropriately with good reproducibility. However, in the present invention, the space is smaller than the outer diameter φ1 of the sample container 10, and hence an appropriate and reproducible cooling process can be performed.

In the present invention, the above space can be further narrowed as shown in (b) of FIG. 3, and thereby the cooling process of the plurality of sample containers 10 can be performed more appropriately. Specifically, the spacing between the inner surface of the opening 21 and the sample container 10 may be at 5% or less of the outer diameter φ1 of the sample container, or at 0.1 mm or less.

For example, if the outer diameter φ1 of the sample container is at 3 mm, by setting the difference (φ2 - φ1) between the outer diameter φ2 and the inner diameter φ1 at 0.15 mm (5% of φ1) or less, stable and good heat transmission is secured between the heat transmission block 20 and the sample container 10, and thus an appropriate and reproducible cooling process can be performed.

If the outer diameter φ1 of the sample container is at 2 mm, by setting the difference (φ2 - φ1) between the outer diameter φ2 and the inner diameter φ1 at 0.1 mm or less, stable and good heat transmission is secured between the heat transmission block 20 and the sample container 10.

That is, the difference (φ2 - φ1) between the outer diameter φ2 and the inner diameter φ1 may be specified to be at a percentage of the outer diameter φ1 (5% or less) when the outer diameter φ1 of the sample container 10 is large, and specified in terms of absolute dimension (0.1 mm or less) when the outer diameter φ1 of the sample container 10 is small.

The heat transmission block 20 having the openings 21 may be integrally made of a single block material, but can be configured with a combination of a plurality of division blocks, which is a so-called multi-division configuration. In the case of the multi-division configuration, the opening 21 may also be formed with divisions. For example, in the case of a two-division configuration, an opening 21 can be formed by combining grooves formed respectively in two division blocks.

The cooling unit 25 comprises Peltier devices, and its cooling side (heat absorbing side) is in intimate contact with the entire underside of the heat transmission block 20. Plural stages of the Peltier devices are serially stacked and thus can cool to a necessary freezing temperature (low temperature) in the cooling process.

With this cooling unit 25, the heat transmission block 20 can be cooled to a predetermined freezing temperature or at predetermined cooling rate. Although not shown, the heat transmission block 20 and the cooling side of the cooling unit 25 are thermally insulated from the outside air by an insulator of resin foam or the like.

The guide table 30 is disposed on one end side of the heat transmission block 20 as shown in FIG. 2. A plurality of guide grooves 31 are formed in parallel in the top surface of the guide table 30. Each guide groove 31 extends along an extension axis of the respective opening 21, and is formed to position and hold one of the sample containers 10 so as to guide it into the opening 21.

Although there is a slight insulating gap between the guide table 30 and the heat transmission block 20, the tube-like sample containers 10 are guided across the gap into the openings 21 of the heat transmission block 20.

The movement driving means 40 comprises a plurality of push rods 42, a rod guide 43, a movable member 44, a straight movement guide (linear guide) 45, a stepping motor 46, a ball screw 47, and the like. This movement driving means 40 is provided on a common base 41 together with the heat transmission block 20, the guide table 30, and the like.

The push rods 42 extend in parallel with each other respectively along extension axes of the openings 21, and are configured to push the sample containers 10 positioned and held in the guide grooves 31 of the guide table 30 respectively along the extension axes of the openings 21 so as to move.

The rod guide 43 is provided just before the guide table 30. The rod guide 43 positions and guides the push rods 42 so as to cause the ends of the push rods 42 to accurately coincide with the center axes of the openings 21 respectively and thus to smoothly move into the openings 21. Although not shown in the drawings, the rod guide 43 has guide openings (or grooves) each of which a push rod 42 is inserted into and guided sliding through.

The proximal ends of the push rods 42 are secured to the movable member 44. The movable member 44 is guided by the straight movement guide 45 so as to move back and forth in parallel with the extension axes of the openings 21. The movable member 44 is driven by the ball screw 47, which is rotationally driven by the stepping motor 46, with being guided by the straight movement guide 45.

The movement of the movable member 44 causes the push rods 42 together to advance, thereby moving the sample containers 10 on the guide table 30 into the openings 21 of the heat transmission block 20. By this advance of the push rods 42, the sample containers 10 pass through the openings 21 and are finally pushed onto a breathable mount provided in a final freezing container 60. In the final freezing container 60, there is a predetermined amount of liquid nitrogen present under the breathable mount, and by adjusting an electric current flowing through an electric heater immersed in the liquid nitrogen, the inside of the final freezing container is kept at a predetermined temperature of, e.g., -100 to -196 °C.

The stepping motor 46 and the ball screw 47 form a push driving means that causes the plurality of push rods 42 to move in the direction of the axes of the openings 21 at predetermined speed. The movement speed and amount of the push rods 42 can be easily and highly accurately controlled by managing the drive pulse period and the cumulative number of pulses of the stepping motor 46 without using complex feed-back control based on position detection.

The control-drive portion 50 comprises a temperature adjusting circuit 51, a motor drive control circuit 52, an operation/setting portion 53, a main control circuit 54, and the like. The temperature adjusting circuit 51 detects the temperature of the heat transmission block 20 by a temperature sensor 26 provided in the heat transmission block 20, and controls an electric current flowing through the Peltier devices and the like so that the detected temperature becomes a predetermined freezing temperature.

The motor drive control circuit 52 manages (monitors) the period of rotation drive pulses and number of the pulses (number of rotation steps) for the stepping motor 46 and its rotation direction, thereby controlling the movement speed, amount, direction, and position of the push rods 42.

The operation/setting portion 53 is constituted by an input device such as a keyboard, via which the operation conditions, operation sequences, and the like are set for the temperature adjusting circuit 51 and the motor drive control circuit 52. The main controller 54 comprises a microcircuit-sized computer (so-called microcomputer) and controls the operations of the circuit 51 and the control circuit 52 based on the operation conditions, operation sequences, and the like set via the operation/setting portion 53 with taking time into account.

In the control-drive portion 50, the main controller 54 may be configured to centrally implement some or most of the functions of the temperature adjusting circuit 51 and the motor drive control circuit 52 by means of software. Conversely, the temperature adjusting circuit 51 and the motor drive control circuit 52 may be configured to implement some or all of the functions of the main controller 54. As such, there is no limitation on the hardware configuration of the control-drive portion 50.

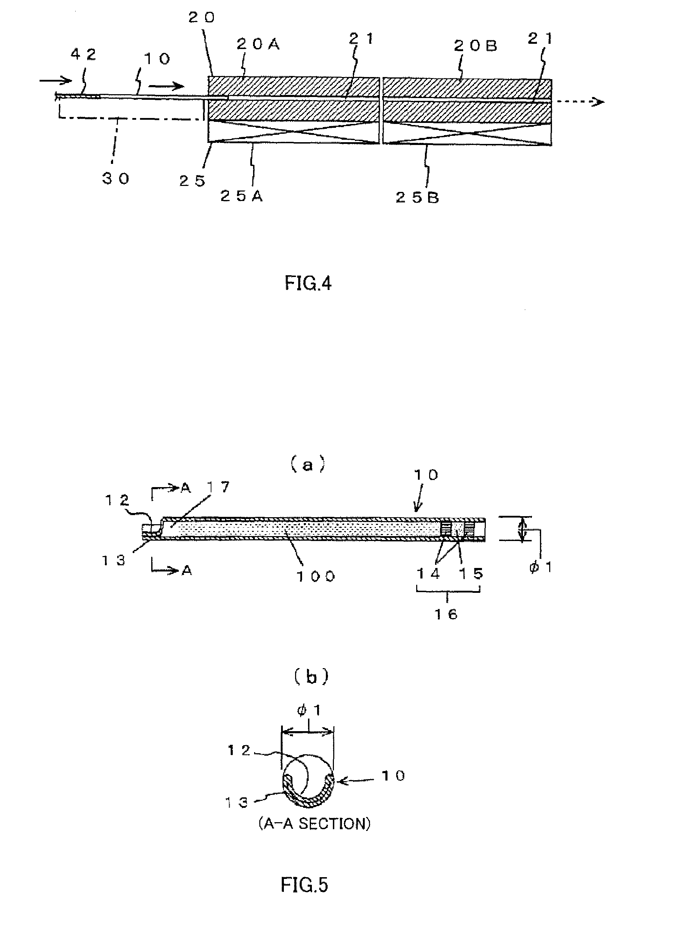

FIG. 4 shows main part of another embodiment of the present invented apparatus. Description will be made focusing on the differences from the above embodiment. The apparatus of the Figure comprises a plurality of, here two, heat transmission blocks 20A, 20B arranged serially in the direction of movement of the sample containers 10, and a plurality of, here two, cooling units (cooling means) 25A, 25B which each cool the heat transmission block 20A, 20B to a predetermined chilling (freezing) temperature or at predetermined cooling rate.

In each heat transmission block 20A, 20B, there are provided openings 21 that the sample containers 10 are inserted into and pass through in an almost fitting state which extend along the same axes for each transmission block. There is a thermally insulating gap between the two heat transmission blocks 20A, 20B. Although not shown in the Figure, each of the heat transmission blocks 20A, 20B and the cooling units 25A, 25B is thermally insulated from the outside air.

In this embodiment, the temperature condition is set independently for the plurality of, here two, heat transmission blocks 20A, 20B, and thereby multiple and complex cooling processes can be performed compared with the case of a single heat transmission block. By this means, an optimum cooling process can be selected more exactly according to the type of biological sample and the like.

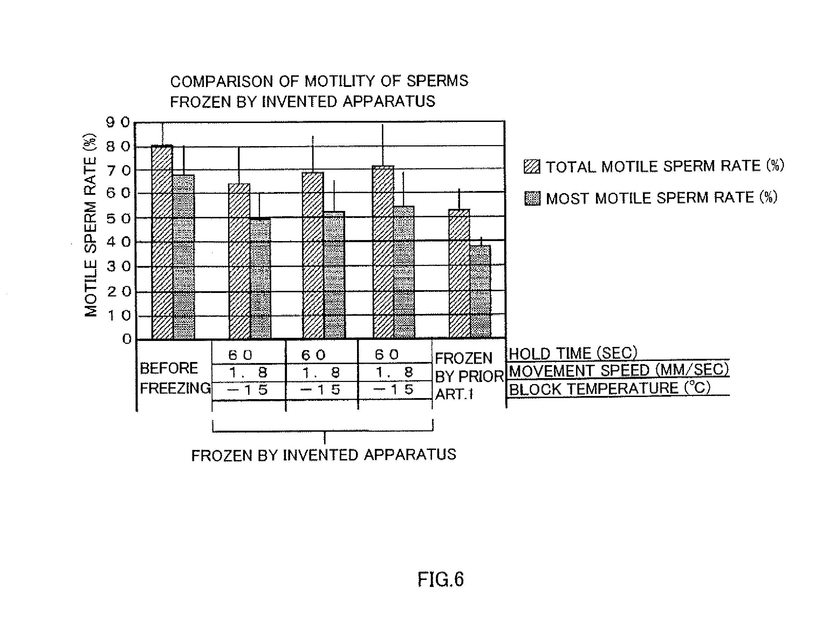

FIG. 5 shows sections of a sample container 10 suitable for the cooling process using the apparatus of the present invention. The sample container 10 shown in the Figure is basically of the same standard as the conventional one, and is constituted by a predetermined length of a straw-like resin-made circular tube. The lower end (right end in the Figure) of the sample container 10 is closed by an enclosing plug 16 formed of a cotton-like plug member 14 and a powder-like water retention agent 15. The upper end (left end in the Figure) of the sample container 10 has a layer of air 17 adequate in amount to prevent damage to the sample container when frozen, and its tip is closed by press sealing. A biological sample 100 is enclosed in the sample container with both ends closed.

In the conventional press sealing, an end of a container 10 is pressed to be flat, and thus the pressed and sealed portion protrudes from the outer circumference of diameter φ1 of the container 10. This protruding portion is likely to be an obstacle to making the sample container 10 pass through the opening 21. Although the space (φ2 - φ1; see FIG. 3) between the sample container 10 and the opening 21 is desirably as small as possible, if the sample container 10 has such a protruding portion, the space cannot be reduced. When the space becomes larger, the air layer in the space becomes thicker and thus, negative heat cannot be transmitted smoothly or evenly from the heat transmission block to the inside of the sample container 10. Hence, variations in the cooling are likely to occur.

Accordingly, in the embodiment shown in FIG. 5, an end of the sample container 10 is divided in its circumference into about halves, and by laying one semi-circumference 12 over the inner side of the other semi-circumference 13 in an arc shape and pressing the arc-shaped laid-over portions against each other to stick, the end of the sample container 10 is press sealed without producing a portion protruding from the outer circumference of diameter φ1 of the container 10.

By this means, even if the space (φ2 - φ1) between the sample container 10 and the opening 21 is smaller, the sample container 10 can smoothly pass through the opening 21. Hence, negative heat can be transmitted smoothly from the heat transmission block to the inside of the sample container 10, thus producing more of the effect of preventing the occurrence of variations in the cooling.

Next, the operation and usage of the above biological sample freezing apparatus will be described below.

In the above apparatus, as shown in FIGS. 1 and 2, sample containers 10 to be processed are mounted on the guide table 30. Because the guide grooves 31 are in the guide table 30, the guide grooves 31 guide the sample containers 10 respectively to position and hold them in place.

After the sample containers 10 are set, by having the stepping motor 46 rotate, the push rods 42 are together made to advance, thereby causing the sample containers 10 to move from the guide table 30 into the openings 21 of the heat transmission block 20. At this time, the heat transmission block 20 is adjusted to be at a predetermined temperature beforehand.

While passing through the openings 21, the sample containers 10 are cooled by means of transmission of negative heat from the heat transmission block 20, and thereby the samples in the sample containers 10 are frozen to a cryopreservable state. The sample containers 10 for which the cooling process is completed are pushed out of the openings 21 by the push rods 42 and collected in the final freezing container 60.

In the above operation, the sample containers 10 can be cooled by use of a process comprising the steps (1) to (3) of:
(1) causing the sample containers 10 to pass at predetermined speed through the openings 21 of the heat transmission block 20 cooled to a predetermined temperature,
(2) causing the sample containers 10 to stay in the openings 21 of the heat transmission block 20 cooled to a predetermined temperature for a predetermined time,
(3) causing the sample containers 10 to stay in the openings 21 of the heat transmission block 20 that is being cooled at predetermined cooling rate for a predetermined time.

Any combination of the above steps (1) to (3) can be selected according to the type of sample or the like, and conditions (movement speed, stay time, cooling temperature, cooling rate, etc.) for each step can be set arbitrarily.

Furthermore, with the apparatus comprising the plurality of heat transmission blocks 20A, 20B (FIG. 4), the sample containers 10 can be cooled by sequentially using the two or more heat transmission blocks 20A, 20B different in the set condition of temperature. This enables further multiple and complex cooling processes, and further optimum cooling can be performed highly accurately according to the type of sample and the like.

In order to set the respective cooling conditions in the openings to be the same, the openings 21 are desirably arranged in parallel with each other and spaced a predetermined interval apart in the heat transmission block 20.

### <Example 1>

FIG. 6 is a graph showing the total motile sperm rate (motility) and most motile sperm rate of semen (from bulls) frozen by use of the apparatus having a single heat transmission block 20 for different values of cooling conditions. As shown in the Figure, the freezing method using the invented apparatus scored apparently better marks in terms of the total motile sperm rate and most motile sperm rate of semen thawed after cryopreservation than that of the prior art 1.

Moreover, as shown in the Figure, a significant difference in sperm motility occurs depending on conditions of the heat transmission block temperature, sample container movement speed, hold time for which to be in the heat transmission block (opening), and the like, but with the apparatus of the present invention, optimum conditions can be set highly accurately with good reproducibility.

### <Example 2>

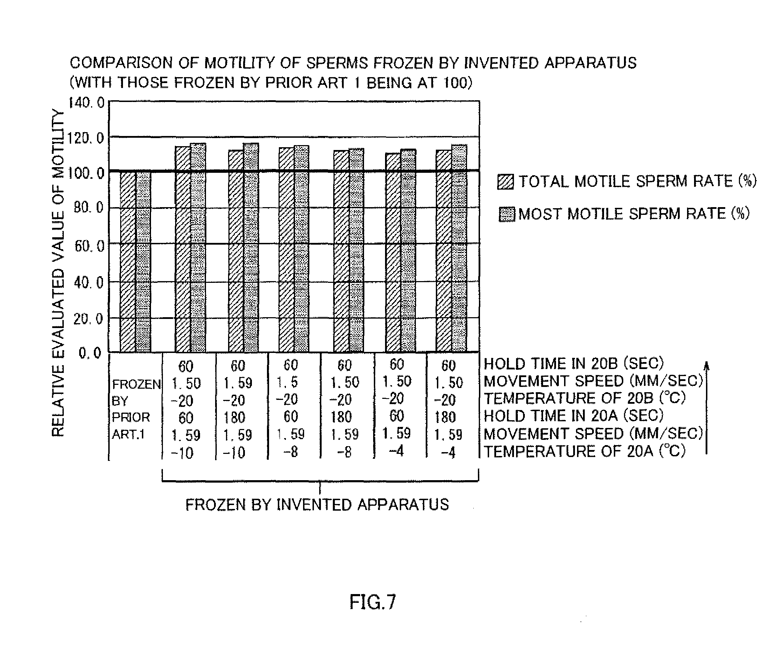

FIG. 7 is a graph showing the sperm motility (total motile sperm rate and most motile sperm rate) of semen (from bulls) frozen by use of the apparatus having the two heat transmission blocks 20A, 20B (FIG. 4) for different values of cooling conditions. As shown in the Figure, also in this example, the freezing method using the invented apparatus scored apparently better marks in terms of the sperm motility of semen thawed after cryopreservation than that of the prior art 1.

Moreover, as shown in the Figure, the sperm motility differs depending on conditions of the temperatures of the heat transmission blocks 20A, 20B, sample container movement speed, hold time for which to be in the heat transmission block (opening), and the like, but with the apparatus of the present invention, optimum conditions can be set in various ways with good reproducibility.

Although the present invention has been described by way of typical embodiments, various other embodiments of the present invention are possible.

For example, the opening 21 of the heat transmission block 20 is changeable in shape corresponding to the outer shape of the sample container 10. The heat transmission block 20 may take various shapes other than the rectangular plate-like shape. The openings 21 may be arranged in two or more rows, not being limited to being in one row. Alternatively, they may be arranged in a circle or another shape. Further, the direction of the openings 21 may be other than horizontal.

As the cooling means, the cooling unit 25 using Peltier devices is most suitable in terms of miniaturization, simplification, and controllability of the apparatus, but other cooling means (freezing means) may be used. Furthermore, three or more of the heat transmission blocks may be provided.

### INDUSTRIAL APPLICABILITY

When cooling sample containers containing biological samples such as semen for cryopreservation, appropriate and reproducible cooling conditions can be set for the sample containers, and variations in the cooling conditions between the sample containers can be prevented from occurring. Thus, the cryopreservation of the biological samples that is excellent in reproducibility with suppressing the bad effect of cell damage when frozen becomes possible.

## Claims

1. A biological sample freezing apparatus for freezing biological samples contained in tube-like sample containers, **characterized by** comprising:
a heat transmission block that is cooled to a predetermined temperature and/or at predetermined cooling rate, the heat transmission block having a plurality of separate openings that extend through the block from one end to the other end, each of the openings being formed such that one of the sample containers is inserted into and passed through the opening; and
a movement driving means that causes the sample containers to pass through the openings respectively.

2. The biological sample freezing apparatus according to claim 1, **characterized in that** the plurality of openings are each formed to have such an inner diameter that a space formed between the inner surface of the opening and the sample container is at least smaller in thickness than the outer diameter of the sample container.

3. The biological sample freezing apparatus according to claim 1 or 2, **characterized in that** the plurality of openings are each formed such that a space formed between the inner surface of the opening and the sample container is at 5% or less of the outer diameter of the sample container, or at 0.1 mm or less.

4. The biological sample freezing apparatus according to any of claims 1 to 3, **characterized in that** the plurality of openings are arranged in parallel with each other and spaced a predetermined interval apart in the heat transmission block.

5. The biological sample freezing apparatus according to any of claims 1 to 4, **characterized in that** provided on one end side of the heat transmission block is a guide table which positions the sample containers respectively along extension axes of the plurality of openings and which guides them into the openings respectively.

6. The biological sample freezing apparatus according to any of claims 1 to 5, **characterized in that** the movement driving means comprises a plurality of push rods which push respectively the sample containers in a direction of axes of the openings to move, and a push driving means which causes the plurality of push rods to move in the direction of the axes of the openings at predetermined speed.

7. The biological sample freezing apparatus according to claim 6, **characterized in that** the push driving means comprises a stepping motor or a servo motor as its driving source, and **in that** the freezing apparatus comprises a control means which manages the period and number of drive pulses for the stepping motor or the servo motor, thereby controlling movement speed and amount of the push rods.

8. The biological sample freezing apparatus according to any of claims 1 to 7, **characterized in that** a Peltier device is used as a means for cooling the heat transmission block.

9. The biological sample freezing apparatus according to any of claims 1 to 8, **characterized in that** a plurality of the heat transmission blocks are arranged serially along a direction of movement of the sample containers, and **in that** the freezing apparatus comprises a plurality of cooling means which each cool a respective one of the heat transmission blocks to a predetermined temperature or at predetermined cooling rate.

10. A biological sample freezing method for freezing biological samples contained in tube-like sample containers, **characterized in that** the sample containers are cooled by use of the biological sample freezing apparatus according to one of claims 1 to 9.

11. The biological sample freezing method according to claim 10, **characterized by** comprising the step of causing the sample containers respectively to pass at predetermined speed through openings of a heat transmission block cooled to a predetermined temperature.

12. The biological sample freezing method according to claim 10 or 11, **characterized by** comprising the step of causing the sample containers to stay for a predetermined time in openings of a heat transmission block cooled to a predetermined temperature.

13. The biological sample freezing method according to any of claims 10 to 12, **characterized by** comprising the step of causing the sample containers to stay for a predetermined time in openings of a heat transmission block that is being cooled at predetermined cooling rate.

14. The biological sample freezing method according to any of claims 10 to 13, **characterized in that** the sample containers are cooled by sequentially using two or more heat transmission blocks different in a set condition of temperature.
